# EUROPEAN PATENT SPECIFICATION

(11) **EP 3 177 745 B1**
(45) Date of publication and mention of the grant of the patent: **28.11.2018**
(21) Application number: 15734689.1
(22) Date of filing: 08.07.2015
(51) Int. Cl.: A61C 5/42, B21C 1/00, B21C 1/02, C22C 14/00, C22C 19/00, C22C 19/03, C22F 1/18, C21D 8/06, C22F 1/10

(54) **HIGH FATIGUE RESISTANT WIRE**
DRAHT MIT HOHER ERMÜDUNGSBESTÄNDIGKEIT
FIL RÉSISTANT À UNE FATIGUE ÉLEVÉE

(30) Priority: 24.07.2014 EP 14178336
(43) Date of publication of application: 14.06.2017
(73) Proprietor: NV Bekaert SA, 8550 Zwevegem (BE)
(72) Inventor: ASLANIDIS, Dimitrios, 1320 Beauvechain (BE); SCHILDERMANS, Inge, 8570 Ingooigem (BE)
(74) Representative: Messely, Marc
(86) International application number: PCT/EP2015/065540
(87) International publication number: WO 2016/012236

(56) References cited:
- WO-A1-2011/062970
- US-A1- 2010 092 915
- US-A1- 2012 282 571

## Description

### Technical Field

The present invention relates to a wire, in particular to a high fatigue resistant wire, a method for producing such a wire and the application of such a wire.

### Background Art

There has been great interest in shape memory and superelastic alloys such as nickel-titanium. This family of alloys, also known as Nitinol (i.e., Nickel-Titanium Naval Ordinance Laboratory) is typically made from a nearly equal atomic composition of nickel and titanium. Key to exploit the performance of Nitinol alloys is the control of the phase transformation in the crystalline structure that transitions between an austenitic phase and a martensitic phase. The austenitic phase is commonly referred to as the high temperature phase, and the martensitic phase is commonly referred to as the low temperature phase. In general terms, this temperature-dependent phase transformation is from martensite to austenite during heating, while the reverse phase transformation from austenite to martensite starts upon cooling. As the temperature increases above a certain critical temperature, known as the austenite start temperature or As, the alloy rapidly changes in composition between the martensite and austenite phase and completes the transition to austenite at a critical temperature known as the austenite finish temperature or A_{F}.

There are two known methods for obtaining a target A_{F} temperature: varying the bulk nickel-to-titanium ratio and varying the local nickel-titanium ratio by thermally heat treating the material at its finished form. The A_{F} of Nitinol is affected directly by the ratio of nickel to titanium during production of the ingot. The target A_{F} temperature can be lowered or raised by varying the nickel percentage alone. The A_{F} temperature is also directly affected by the processing of the material post-ingot form by the amount of cold work, the temperatures at which the material is thermally heat treated, and the amount of strain and strain rate induced during processing.

Because the martensitic phase is soft and malleable, it can enhance the fatigue resistance when present during the fatigue performance. This can be attributed to early strain/stress accommodation due to different crystalline structures between Nitinol in its martensitic and austenitic phase. Austenitic Nitinol's crystalline structure is known to be a face centered cubic lattice, while the martensitic crystalline structure is a monoclinic distorted structure with atomic dislocations. The distorted structure of martensitic Nitinol allows for the material to be twinned and deformed at greater angles than that of the austenitic Nitinol at similar working conditions. Nitinol in the austenite phase is strong and hard, having a much more regular crystalline lattice structure and exhibiting properties similar to those of titanium. Generally, when the working or working environment is above the A_{F} temperature, meaning the Nitinol is in its austenitic phase, the material cannot withstand the same level of stress/strain, such as cyclical rotating bending fatigue, as it can withstand when it accompanied with its martensitic phase.

In the field of endodontic instruments, some new development are prone to make rotary dental files or drills having martensitic working state due to its flexibility and resistance to fracture resulting from cyclic fatigue or torsional overload.

US Patent No.7,648,599 teaches a process by which Nitinol in its martensitic phase undergoes cold and hot cycling to stabilize the martensitic twins and therefore significantly improve fatigue performance. However, subsequent testing has shown that this process is not necessary since the fatigue resistance provided by the twins is well beyond the amount of cycling encountered during a dental file's single use. Further, it is not necessary to provide shape memory feature as it may affect the surrounding tissue if the file attempts to straighten itself.

Patent application WO2011/143063 provides a method for manufacturing a non-superelastic rotary file by heating the rotary file to alter the austenite finish temperature. According to this patent application, the altered austenite finish temperature of such treated non-superelastic rotary file can be greater than 37°C.

Patent application WO2011/062970 discloses a Nitinol wire having an austenite finish temperature A_{F} in the range of 40°C to 60°C and being suitable for use in forming rotary dental files. Such a wire is formed by undergoing a final thermal heat treat in a specific temperature range of about 410°C to 440°C. US Patent publication no. 2012/282571 deals with a Nitinol wire used for dental files with a similar alloy composition and teaches a process for manufacturing dental files.

In order to reduce or avoid the occurrence of undesired procedural accidents such as ledging or perforation in the practice of endodontic, there are demands for new endodontic instruments having improved fatigue resistance.

### Disclosure of Invention

It is an object of the present invention to provide a high fatigue resistant Nitinol wire, in particular having high bending and rotational fatigue resistance.

It is still an object of the present invention to provide a processing method to produce a high fatigue resistant Nitinol wire.

It is yet another object of the present invention to provide a dental device in particular a rotary dental file comprising a working portion made from a high fatigue resistant Nitinol wire.

According to a first aspect of the present invention, there is provided a high fatigue resistant nickel-titanium alloy wire. The wire has a transition temperature between -15°C to +10°C, preferably between -15°C to -5°C, and more preferably between -10°C to -5°C after annealing at a temperature in the range of 700°C to 900°C for 5 to 30 minutes, said wire is drawn to a desired diameter followed by annealing at a temperature in the range of 500°C to 600°C and heat treating at a temperature in the range of 350°C to 380°C, and said wire is characterized by a Full-Width at Half-Maximum (FWHM) of the (110) austenite nickel-titanium diffraction peak in the range of 0.6° 2θ to 0.7° 2θ, and preferably in the range of 0.6° 2θ to 0.65° 2θ, in a X-ray diffraction pattern using a Cu Kα radiation source.

The A_{F} temperature is commonly used as a metric in defining the characteristic of a Nitinol device since it defines when the Nitinol is completely in the austenitic phase. The A_{F} temperature is usually measured by a technique called Differential Scanning Calorimetry (DSC) technique. The DSC technique detects the energy released and absorbed during the martensitic (exothermic) and austenitic (endothermic) transformations, respectively, and thus produces data indicating A_{F} temperature at stress free conditions. The "transition temperature" is commonly defined as the A_{F} temperature after a "full anneal" of the alloy. The DSC yields excellent and repeatable results on fully annealed samples. A full annealing implies that the nickel-titanium alloy has been completely strain and stress relieved, typically occurring at a temperature in the range of 700°C to 900°C. DSC of wire in fully annealed condition are often used as the basis for NiTi raw material selection since the alloy after full annealing reveals the original characteristic of the material. The transition temperature is an indirect indicator of the chemical composition of the alloy in the present condition. Heat treatment and cold work can also change the transition temperature of the alloy and the transition temperature reflects the processing history received by the alloy. According to the present invention, the transition temperature is measured by DSC method after the nickel-titanium alloy has been produced to the final wire shape. According to the present invention, the wire has a transition temperature between -15°C to +10°C, preferably between -15°C to -5°C, and more preferably between -10°C to -5°C after annealing at a temperature in the range of 700°C to 900°C depending on the diameter of the wire, e.g. for 5 to 30 minutes. In an example, the transition temperature of said wire having a diameter of 1 mm is about -7°C after annealing at a temperature of about 850°C for 20 minutes.

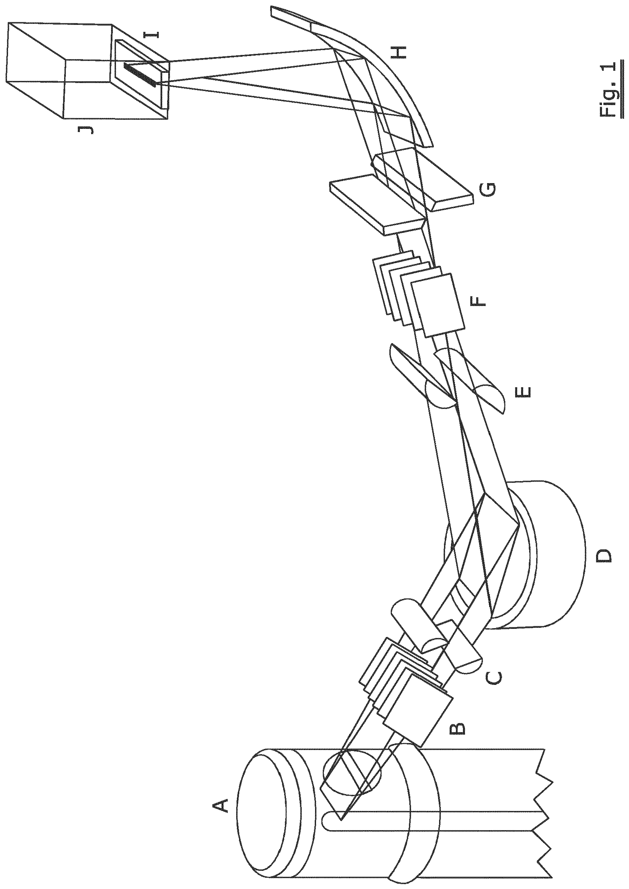

The X-ray diffraction (XRD) pattern of the wire according to the present invention is measured by Siemens D5000 diffractometer at room temperature. The configuration of the diffractometer is schematically shown in Fig. 1. It comprises X-ray tube (A), Primary soller slit (B), Variable divergence slit (C), Sample holder (D), Antiscatter slit (E), Secondary soller slit (F), Receiving slit (G), Monochromator (H), Detector slit (I) and Detector (J). The X-ray diffraction pattern is measured by a (Locked Coupled) continuous θ-2θ measurement from 25° to 80° under the following conditions:
Radiation source voltage: 40kV
Radiation source amplitude: 40mA
Monochromator: Graphite
Detector: Scintillation
Variable divergence slit: 6 mm
Primary and secondary soller slit
Antiscatter slit: 2 mm
Receiving slit: 0.2 mm
Detector slit: 0.6 mm
Step size: 0.02°
Scan speed: 0.02°/min
Background correction: linear subtraction between 38° to 48° 2θ.

The FWHM of the (110) austenite nickel-titanium diffraction peak together with the transition temperature after full annealing indicates a unique high fatigue resistant nickel-titanium alloy wire.

Without a full annealing treatment, the austenite finish temperature A_{F} of the high fatigue resistant nickel-titanium alloy wire as produced according to the present invention is greater than 40°C, such as about 45°C or about 50°C.

In an example, the nickel-titanium alloy wire according to the present invention has certain amount of Ni₃Ti precipitation as detected by the XRD measurement. The peak intensity ratio of the (202) peak of Ni₃Ti to the sum of the (110) peak of austenite NiTi and the (202) peak of Ni₃Ti is in the range of 5% to 20%, preferably in the range of 5 to 15%, more preferably in the range of 10 to 12%. The ratio of peak intensity is calculated by means of peak height measurement after linear subtraction of background between 25° to 80° 2θ.

Ni₃Ti can be expected just below the surface of the wire and this is due to the oxide growth mechanism. The formation of a thin natural oxide layer in air contact is due to thermal oxidation. Ti diffuses towards the center of the oxide and creates vacancies, voids and Ni rich subsurface areas.

The diameter of high fatigue resistant nickel-titanium alloy wire is dependent on the application. As an example, the diameter of the wire is in the range of 0.1 mm to 3 mm, e.g. between 0.4mm to 2.0 mm. The wires preferably have a diameter in the range of 0.6 to 1.5 mm for dental applications.

The nickel-titanium alloy wire according to the present invention is characterized by a well-known rotating-beam fatigue testing method. The testing instrument consists essentially of a motor-driven chuck where one end of the specimen is securely held, and a bushing-bar with many holes (each a bushing) to position the other end of the specimen which is freely held. Two supporting guides hold the specimen in a horizontal plane near, but not in, the region of maximum stress. The rotating-beam fatigue testing method is well described by F. A. VOTTA, Jr. in Article "New Wire Fatigue Testing Method" reprinted from the Iron Age, August 26, 1948. Tests are made for all the invention wires by setting the Chuck-bushing distance C=120 mm and the sample Length L=290 mm, under 1% strain at constant rotation speed 3600 rpm at about 20°C to 23°C. The total number of cycles before the failure of the wire is above 10000 for all the invention wires.

According to a second aspect of the present invention, it is provided a method for manufacturing a high fatigue resistant nickel-titanium alloy wire, comprising the steps, preferably in the sequence, of: (a) provide a nickel-titanium alloy wire rod or wire having a composition of about 50 ± 10 wt% nickel with a balance of titanium and trace elements, (b) anneal said nickel-titanium alloy wire rod or wire at a temperature in the range of 700°C to 900°C, (c) draw said nickel-titanium alloy wire rod or wire through one or more passes to achieve a nickel-titanium alloy wire with desired diameter, (d) anneal said nickel-titanium alloy wire at a temperature in the range of 500°C to 600°C, and (e) heat treat said annealed nickel-titanium alloy wire at a temperature in the range of 350°C to 380°C. Hereby, in between step (d) and step (e), multiple thermal treatments between 350°C to 600°C can be applied. For example, the wire is treated at 500°C for 5 minutes or at 400°C for 10 minutes.

Herewith, all the steps are performed in a continuous (without cutting or interruption) wire production line. The wires on the continuous production line are normally under constant strain e.g. the applied force on wire in the range of 0.1 to 10 kg depending on the diameter of the wire. Normally, the smaller the diameter of the wire, the lower the applied force. The applied force of step (d) (annealing wire at a temperature in the range of 500°C to 600°C) is preferably in the range of 0.3 to 3 kg. The applied force of step (e) (annealing wire at a temperature in the range of 350°C to 380°C) is preferably in the range of 0.1 to 1 kg. The applied force on the one hand keeps the wire in straight form and not sagging, and on the other hand the relatively lower force keeps the wire uniform and not overstretched.

Preferably, in step (b) said nickel-titanium alloy wire rod or wire is annealed for a time period of 5 to 30 minutes. And preferably, in step (c) said nickel-titanium alloy wire rod or wire is drawn through two or more passes, and the nickel-titanium alloy undergoes annealing at 600°C to 850°C after one or more passes. More preferably, in step (c) said nickel-titanium alloy wire rod or wire is drawn through two or more passes to achieve a cross-section area reduction of about 40%, subsequently undergoes annealing, and is further drawn to achieve a cross-section area reduction of about 40%. In step (e) heat treatment, the time period varies preferably from about 5 to about 60 minutes.

Normally, the hot, memorized shape of memory alloy component is set by fixing the shape memory component by annealing, which is a heat treatment typically at 500°C to 600°C. A so called "Straight annealing" to anneal the wire at 500°C to 600°C based upon its diameter, which means that the hot shape is set to a straight wire, is conventionally following the final drawing of Nitinol wire. This is the final thermal processing of conventional Nitinol wire. In the prior art WO2011/062970, this final thermal treatment is performed at relatively low temperature, i.e. at a temperature in the range of about 410°C to 440°C and there are no intermediate processing steps occurring between the cold working of the wire and this final thermal treatment. According to the present invention, the nickel-titanium alloy wire having desired or final diameter is first annealed at a temperature in the range of 500°C to 600°C and then post heat treated at a lower temperature, e.g. in the range of 350°C to 380°C. The multi-step final thermal treatment on the final drawn nickel-titanium alloy wire according to the invention results in a unique end produce with specific structure and high fatigue resistant properties.

According a third aspect of present invention, it is provided a device for endodontic, said device comprising a working portion made from the invention high fatigue resistant nickel-titanium wire. As an example, said device can be a rotary dental file.

According to a fourth aspect of the present invention, it is provided a method for manufacturing devices for endodontic, said method comprising the steps of: (i) providing the nickel-titanium alloy wire according to the present invention, (ii) forming devices for endodontic, in particular dental files, from said nickel-titanium alloy wire by performing cutting and machining operations.

According to the present invention, a post heat treatment was performed on the nickel-titanium alloy wire at a temperature in the range of 350°C to 380°C. This is totally different from prior art WO2011/143063 where a similar heat treatment (at least 300°C) was applied on a superelastic Nitinol rotary file. In the present invention, the post heat treatment is applied on wires, in particular on wires at continuous production line. Therefore, except the temperature range of the post heat treatment of the present invention is not specifically disclosed in WO2011/143063, the process sequence of the present invention is different from WO2011/143063 (i.e. first heat treat the wire afterward cutting and machining into a rotary file, vs. first cutting and machining into a rotary file, afterward heat treat the rotary file), which can significantly influence the characteristics of the nickel-titanium alloy wire. It is already noted that in the process of finishing a Nitinol medical instrument, machining operations such as grinding would be employed. These machining operations can degrade the physical properties of the material. For example, prior to machining operations a Nitinol wire prepared using the method of US Patent No. 7,648,599 might be five-times more resistant to cyclic fatigue than Nitinol wires prepared by conventional means. After machining operations, this same wire may be only three-times more resistant. The machining processes produce mechanical stress, local strain, and frictional wear which alter the characteristics of the surface of wire. Therefore, a same heat treatment done on the wire or file after machining of the wire can result in different properties, in particular the mechanical & thermal behavior and surface characteristics of the wire. In addition, the wires on the continuous production line are normally under constant strain e.g. 0.1 to 10 kg to keep the wire in straight form. Therefore, the post heat treatment applied on continuous wire line means the heat treatment is done while the wire is under certain constant strain due to the requirement of continuous production. In the contrary, this is not the case when the post heat treatment is done on the individual rotary files. Also, it is economical and easy to operate when the heat treatment applied on wire level compared with the heat treatment on rotary file level.

### Brief Description of Figures in the Drawings

The invention will be better understood with reference to the detailed description when considered in conjunction with the non-limiting examples and the accompanying drawings, in which:
Figure 1 schematically shows the configuration of the diffractometer used to characterize the NiTi alloy wire according to the present invention.
Figure 2 schematically shows the diagram of production process of the NiTi alloy wire according to the present invention.
Figure 3 compares the fatigue resistance of the NiTi alloy wire according to the present invention with a reference NiTi alloy wire.
Figure 4 illustrates the DSC curve of the NiTi alloy wire after full annealing according to an embodiment of the present invention.
Figure 5 illustrates the DSC curve of the NiTi alloy wire as produced according to an embodiment of the present invention.
Figure 6 shows the XRD spectrum of the NiTi alloy wire according to an embodiment of the present invention.

### Mode(s) for Carrying Out the Invention

A nickel-titanium alloy wire rod or wire having the composition as shown in table 1 is taken as the starting material.

**Table 1 nickel-titanium alloy composition.**

| Chemical compostion | Min (wt%) | Max (wt%) | Tolerances (wt%) |
|---|---|---|---|
| Nickel | 54.500 | 57.000 | 0.2000 |
| Carbon | | 0.050 | 0.0020 |
| Cobalt | | 0.050 | 0.0010 |
| Copper | | 0.010 | 0.0010 |
| Chromium | | 0.010 | 0.0010 |
| Hydrogen | | 0.005 | 0.0005 |
| Iron | | 0.050 | 0.0100 |
| Niobium | | 0.025 | 0.0040 |
| Nitrogen plus oxygen | | 0.050 | 0.0040 |
| Titanium | 43.000 | 45.500 | 0.0040 |

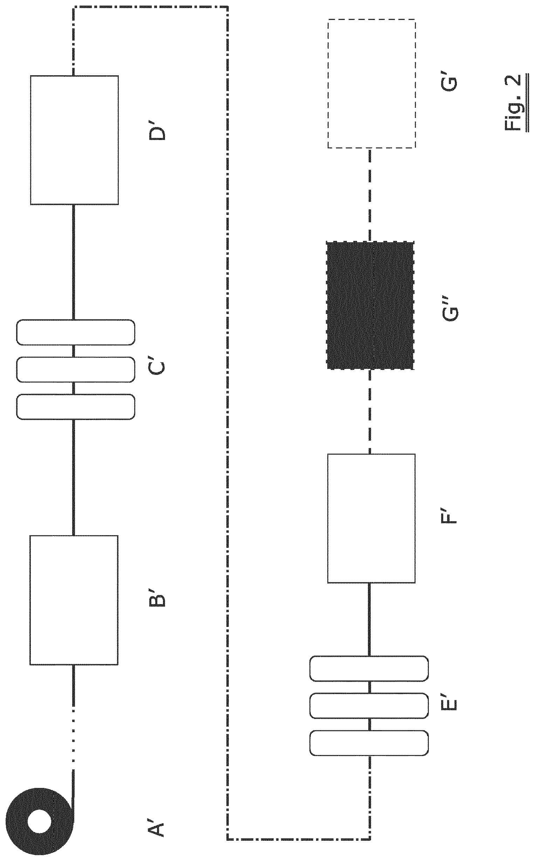

The material was eventually processed into a wire end product having a diameter in the range of 0.1 mm to 1.5 mm. The process was schematically shown in Fig. 2. The process started with a wire rod or wire having a diameter of about 2.35 mm. The wire rod or wire was first paid off from a coil (A' of Fig. 2). The wire rod or wire was then fully annealled at a temperature of about 750°C to release stresses (B'). Then the wire rod or wire was drawn by passing several dies (C'). The cross-section area reduction of the wire per pass was in the range of 10% to 15%. After a cross-section area reduction of about 40%, a full annealing at about 650°C to 800°C was applied to the drawn wire to release stresses (D'). Depending on the desired reduction of the wire, steps (C') and (D') can be repeated. Then the wire was finally drawn to achieve a cross-section area reduction of about 40% (E') and followed by a straight annealing at about 500°C to 600°C (F'). Thereafter, a post heat treatment (G') in the range of 350°C to 380°C for about 5 to 600 minutes was carried out on the processed wire while the wire was still on the coninuous line. Optionally, one or multiple heat treatments (G") in the range of 380°C to 600°C may be applied between straight annealing (F') and post heat treatment (G'). Finally, the wire was cooled down and taken off from the continuous line.

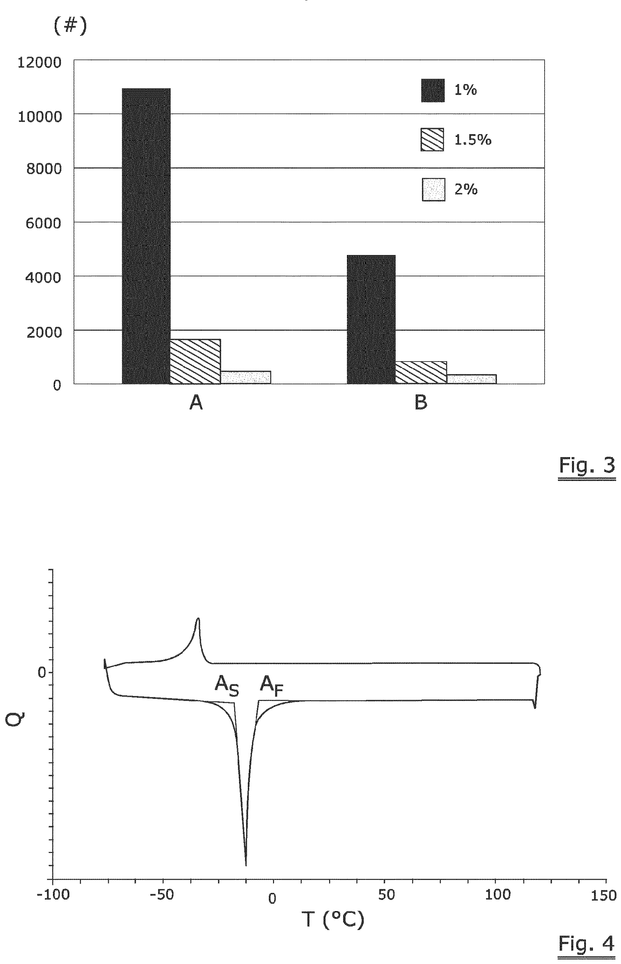

The fatigue resistance of the processed wire is measured by rotating-beam fatigue testing method. The measurements were done respectively under 1%, 1.5% and 2% strain at constant rotation speed 3600 rpm at about 20°C to 23°C. The Chuck-bushing distance under 1%, 1.5% and 2% strain are respectively 120 mm, 80 mm and 60 mm, and the sample Length under 1%, 1.5% and 2% strain are respectively 290 mm, 200 mm and 160 mm. Reference wires processed in similar steps as the invention wire but without a post heat treatment (G' and/or G") are taken for comparison. The average number (of 3 tests) of cycles before the wires were broken in the fatigue test are shown in Fig. 3. The number of cycles before the breaking of the inventon wire (column A in Fig. 3) is about 11000 under 1% strain, is about 1650 under 1.5% strain, and is about 450 under 2% strain while the refence wires (column B in Fig. 3) are broken after about 4800 cycles under 1% strain, after about 800 cycles under 1.5% strain and after about 310 cycles under 2% strain. The invention wire (column A in Fig. 3) has high fatigue resistance and behaves significantly better than the reference wire (column B in Fig. 3) over all the investigated strain rates.

The produced wire according to the present invention can be used to make endodontic devices and in particular dental files.

The wire or the file was characterized by DSC method. The measure Instrument was DSC Q2000 V24.10 Build 122. The heat flow was measured under the following conditions:
Module DSC Standard Cell RC
Data storage Off
Equilibrate at 120.00 °C
Isothermal for 2.00 min
Data storage On
Ramp 5.00 °C/min to -80.00 °C
Isothermal for 2.00 min
Ramp 15.00 °C/min to 120.00 °C
Isothermal for 2.00 min
Ramp 5.00 °C/min to -80.00 °C
Isothermal for 2.00 min

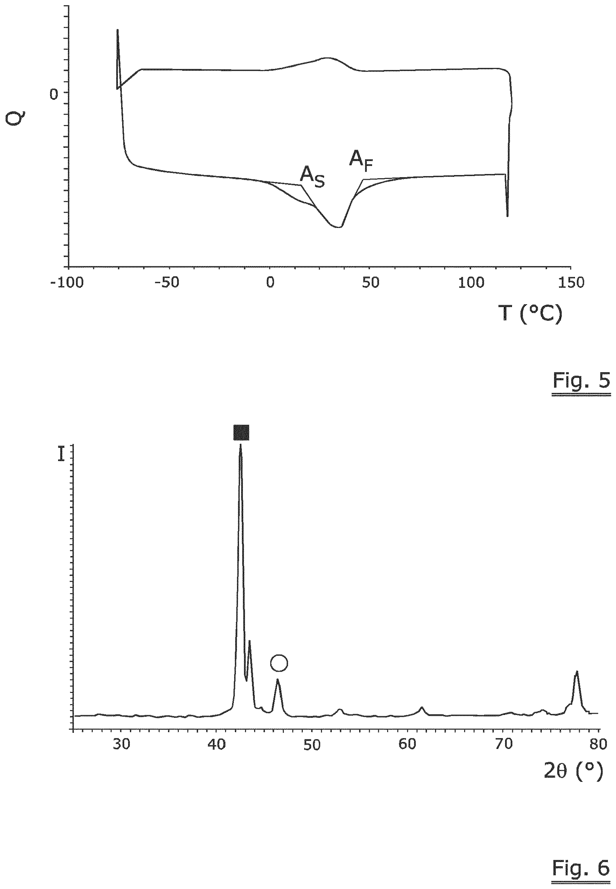

1) The transition temperature of the processed wire after a full annealling was measured. The processed wire was heated at about 850°C for 15 to 30 minutes and followed by water quenching. The measured heat flow as a function of temperature was shown in Fig. 4. During heating, the As is about -20°C and the A_{F} is about -7°C.
2) The A_{F} of the wire as produced was measured. The DSC result was shown in Fig. 5. During heating, the As is about 10°C and the A_{F} is about 46°C.

The processed wire or file according to the present invention was measured by XRD. The measure conditions were the same as described above (see paragraph [0015]). The measured spectrum was shown in Fig. 6. The FWHM of the (110) peak of austenite NiTi (indicated by ■ in Fig. 6) after a background correction of linear subtraction between 38° to 48° 2θ is about 0.63. In this spectrum, it is also observed the peaks or the existence of Ni₃Ti. The (202) peak of Ni₃Ti is indicated by ○ in the spectrum. The peak intensity ratio of the (202) peak of Ni₃Ti to the sum of the (110) peak of austenite NiTi and the (202) peak of Ni₃Ti is about 12% after a background correction of linear subtraction between 25° to 80° 2θ.

Two commerically available products are taken as references. The properties or characterizations of the invention wire or file are compared with referenced products in table 2. As shown in table 2, both the A_{F} of the wire after full annealling and A_{F} of the wire as produced are different with referenced products indicating different properties. The peak intensity ratios of the (202) peak of Ni₃Ti to the sum of the (110) peak of austenite NiTi and the (202) peak of Ni₃Ti of the referenced products are much less than that of the invention wire. The specific FWHM of (110) peak of austenite NiTi and the presence of certain amount of Ni₃Ti illustrate an exclusive microstructure. The composition together with the microstructure of the invention wire or file makes it unique over the available products.

**Table 2 the properties or characterizations of the invention wire compared with two referenced products.**

| Sample | A_{F} after full annealing (°C) | A_{F} of wire as produced (°C) | FWHM of (110) peak of austenite NiTi (°2θ) | Peak intensity ratio (%) Ni₃Ti(202)/ [NiTi (110)+Ni₃Ti(202)] |
|---|---|---|---|---|
| Invention | ∼-7 | ∼45 | 0.627 | 12 |
| Reference 1 | ∼1 | ∼57 | 0.541 | 3 |
| Reference 2 | ∼-10 | ∼60 | 0.746 | <1 |

## Claims

1. A high fatigue resistant nickel-titanium alloy wire, said wire having a transition temperature from -15°C to +10°C after annealing at a temperature in the range of 700°C to 900°C, said wire being drawn to a desired diameter followed by annealing at a temperature in the range of 500°C to 600°C and heat treating at a temperature in the range of 350°C to 380°C, said wire being **characterized by** a Full-Width at Half-Maximum (FWHM) of austenite nickel-titanium (110) diffraction peak in the range of 0.6° 2θ to 0.7° 2θ in a X-ray diffraction pattern using a Cu Kα radiation source,
wherein the X-ray diffraction pattern is measured by a continuous θ-2θ measurement from 25° to 80° under the following conditions:
Radiation source voltage: 40kV
Radiation source amplitude: 40mA
Monochromator: graphite
Detector: Scintillation
Variable divergence slit: 6 mm
Primary and secondary soller slit
Antiscatter slit: 2 mm
Receiving slit: 0.2 mm
Detector slit: 0.6 mm
Step size: 0.02°
Scan speed: 0.02°/min
Background correction: linear subtraction between 38° to 48° 2θ.

2. A high fatigue resistant nickel-titanium alloy wire according to claim 1, wherein the peak intensity ratio of the (202) peak of Ni₃Ti to the sum of the (110) peak of austenite NiTi and the (202) peak of Ni₃Ti is in the range of 5% to 20% after a background correction of linear subtraction between 25° to 80° 2θ.

3. A high fatigue resistant nickel-titanium alloy wire according to claim 1 or 2, wherein the total number of cycles before the breaking of the high fatigue resistant nickel-titanium alloy wire is above 10000 under 1% strain at constant rotation speed 3600 rpm at 20°C to 23°C.

4. A high fatigue resistant nickel-titanium alloy wire according to any one of the preceding claims, wherein the austenite finish temperature A_{F} is greater than 40°C.

5. A high fatigue resistant nickel-titanium alloy wire according to any one of the preceding claims, wherein said wire having a transition temperature from - 15°C to +10°C after annealing at a temperature in the range of 700°C to 900°C for 5 to 30 minutes.

6. A high fatigue resistant nickel-titanium alloy wire according to any one of the preceding claims, wherein the transition temperature of said wire is about -7°C after annealing at a temperature of 850°C for 20 minutes.

7. A high fatigue resistant nickel-titanium alloy wire according to any one of the preceding claims, wherein the diameter of the wire is in the range of 0.1 mm to 3 mm.

8. A method for manufacturing a high fatigue resistant nickel-titanium alloy wire according to any one of the preceding claims, comprising the steps of:
(a) Provide a nickel-titanium alloy wire rod or wire having a composition of about 50 ± 10 wt% nickel with a balance of titanium and trace elements,
(b) Anneal said nickel-titanium alloy wire rod or wire at a temperature in the range of 700°C to 900°C,
(c) Draw said nickel-titanium alloy wire rod or wire through one or more passes to achieve a nickel-titanium alloy wire with desired diameter,
(d)Anneal said nickel-titanium alloy wire at a temperature in the range of 500°C to 600°C.
(e) Heat treat said annealed nickel-titanium alloy wire at a temperature in the range of 350°C to 380°C.

9. A method for manufacturing a high fatigue resistant nickel-titanium alloy wire according to claim 8, wherein in step (b) said nickel-titanium alloy wire rod or wire is annealed for a time period of 5 to 30 minutes.

10. A method for manufacturing a high fatigue resistant nickel-titanium alloy wire according to claim 8 or 9, wherein in step (c) said nickel-titanium alloy wire rod or wire is drawn through two or more passes, and the nickel-titanium alloy wire undergoes annealing at 600°C to 850°C after one or more passes.

11. A method for manufacturing a high fatigue resistant nickel-titanium alloy wire according to any one of claims 8 to 10, wherein in step (c) said nickel-titanium alloy wire rod or wire is drawn through two or more passes to achieve a cross-section area reduction of about 40%, subsequently undergoes annealing, and is further drawn to achieve a cross-section area reduction of about 40%.

12. A method for manufacturing a high fatigue resistant nickel-titanium alloy wire according to any one of claims 8 to 11, wherein in step (e) heat treatment, the time period varies from about 5 to about 60 minutes.

13. A device for endodontic, said device comprising a working portion made from the wire according to any one of claims 1 to 7.

14. A device for endodontic according to claim 13, wherein said device is a dental file.

15. A method for manufacturing devices for endodontic according to claim 13 or 14, said method comprising the steps of:
(i) Providing a nickel-titanium alloy wire according to any one of claims 1 to 7,
(ii) Forming devices for endodontic from said nickel-titanium alloy wire by performing cutting and machining operations.

## Patentansprüche

1. Nickel-Titanlegierungsdraht mit hoher Ermüdungsbeständigkeit, wobei der Draht eine Übergangstemperatur von -15 °C bis +10 °C nach Tempern bei einer Temperatur in dem Bereich von 700 °C bis 900 °C aufweist, wobei der Draht auf einen gewünschten Durchmesser gezogen ist, gefolgt von Tempern bei einer Temperatur in dem Bereich von 500 °C bis 600 °C und Wärmebehandeln bei einer Temperatur in dem Bereich von 350 °C bis 380 °C, wobei der Draht durch eine Halbwertsbreite (FWHM) des austenitischen Nickel-Titan-(110)-Beugungsmaximums in einem Röntgenbeugungsmuster unter Verwendung einer Cu-Kα-Strahlungsquelle in dem Bereich von 0,6° 2θ bis 0,7° 2θ gekennzeichnet ist,
wobei das Röntgenbeugungsmuster durch eine kontinuierliche θ-2θ-Messung von 25° bis 80° unter folgenden Bedingungen gemessen ist:
Spannung der Strahlungsquelle: 40 kV
Amplitude des Strahlungsquelle: 40 mA
Monochromator: Graphit
Detektor: Szintillation
Spalt für variable Divergenz: 6 mm
Primärer und sekundärer Soller-Spalt
Antistreuungsspalt: 2 mm
Aufnahmespalt: 0,2 mm
Detektorspalt: 0,6 mm
Schrittweite: 0,02°
Abtastgeschwindigkeit: 0,02°/min
Untergrundkorrektur: lineare Subtraktion zwischen 38° und 48° 2θ.

2. Nickel-Titanlegierungsdraht mit hoher Ermüdungsbeständigkeit gemäß Anspruch 1, wobei das Maximumintensität-Verhältnis des (202)-Maximums von Ni₃Ti zu der Summe des (110)-Maximums von austenitischem NiTi und des (202)-Maximums von Ni₃Ti in dem Bereich von 5 % bis 20 % nach einer Untergrundkorrektur durch lineare Subtraktion zwischen 25° und 80° 2θ liegt.

3. Nickel-Titanlegierungsdraht mit hoher Ermüdungsbeständigkeit gemäß Anspruch 1 oder 2, wobei die Gesamtzahl von Zyklen vor dem Bruch des Nickel-Titanlegierungsdrahts mit hoher Ermüdungsbeständigkeit über 10000 bei 1 % Dehnung bei einer konstanten Drehgeschwindigkeit von 3600 U/min bei 20 °C bis 23 °C beträgt.

4. Nickel-Titanlegierungsdraht mit hoher Ermüdungsbeständigkeit gemäß einem der vorstehenden Ansprüche, wobei die Austenit-Endtemperatur A_{F} höher als 40 °C ist.

5. Nickel-Titanlegierungsdraht mit hoher Ermüdungsbeständigkeit gemäß einem der vorstehenden Ansprüche, wobei der Draht eine Übergangstemperatur von -15 °C bis +10 °C nach 5 bis 30 Minuten Tempern bei einer Temperatur in dem Bereich von 700 °C bis 900 °C aufweist.

6. Nickel-Titanlegierungsdraht mit hoher Ermüdungsbeständigkeit gemäß einem der vorstehenden Ansprüche, wobei die Übergangstemperatur des Drahts nach 20 Minuten Tempern bei einer Temperatur von 850 °C etwa -7 °C beträgt.

7. Nickel-Titanlegierungsdraht mit hoher Ermüdungsbeständigkeit gemäß einem der vorstehenden Ansprüche, wobei der Durchmesser des Drahts in dem Bereich von 0,1 mm bis 3 mm liegt.

8. Verfahren zur Herstellung eines Nickel-Titanlegierungsdrahts mit hoher Ermüdungsbeständigkeit gemäß einem der vorstehenden Ansprüche, umfassend die Schritte:
(a) Bereitstellen eines Nickel-Titanlegierungsdraht-Stabs oder -Drahts mit einer Zusammensetzung von etwa 50 ± 10 Gew.-% Nickel mit dem Rest Titan und Spurenelementen,
(b) Tempern des Nickel-Titanlegierungsdraht-Stabs oder -Drahts bei einer Temperatur in dem Bereich von 700 °C bis 900 °C,
(c) Ziehen des Nickel-Titanlegierungsdraht-Stabs oder -Drahts mit einem oder mehreren Durchläufen, um einen Nickel-Titanlegierungsdraht mit gewünschtem Durchmesser zu erhalten,
(d) Tempern des Nickel-Titanlegierungsdrahts bei einer Temperatur in dem Bereich von 500 °C bis 600 °C,
(e) Wärmebehandeln des getemperten Nickel-Titanlegierungsdrahts bei einer Temperatur in dem Bereich von 350 °C bis 380 °C.

9. Verfahren zur Herstellung eines Nickel-Titanlegierungsdrahts mit hoher Ermüdungsbeständigkeit gemäß Anspruch 8, wobei bei Schritt (b) der Nickel-Titanlegierungsdraht-Stab oder -Draht über einen Zeitraum von 5 bis 30 Minuten getempert wird.

10. Verfahren zur Herstellung eines Nickel-Titanlegierungsdrahts mit hoher Ermüdungsbeständigkeit gemäß Anspruch 8 oder 9, wobei bei Schritt (c) der Nickel-Titanlegierungsdraht-Stab oder -Draht mit zwei oder mehr Durchläufen gezogen wird und der Nickel-Titanlegierungsdraht nach einem oder mehreren Durchläufen bei 600 °C bis 850 °C getempert wird.

11. Verfahren zur Herstellung eines Nickel-Titanlegierungsdrahts mit hoher Ermüdungsbeständigkeit gemäß einem der Ansprüche 8 bis 10, wobei bei Schritt (c) der Nickel-Titanlegierungsdraht-Stab oder -Draht mit zwei oder mehr Durchläufen gezogen wird, um eine Querschnittsflächenverringerung von etwa 40 % zu erzielen, anschließend getempert wird und weiter gezogen wird, um eine Querschnittsflächenverringerung von etwa 40 % zu erzielen.

12. Verfahren zur Herstellung eines Nickel-Titanlegierungsdrahts mit hoher Ermüdungsbeständigkeit gemäß einem der Ansprüche 8 bis 11, wobei bei dem Wärmebehandlungsschritt (e) die Zeitdauer von etwa 5 bis etwa 60 Minuten variiert.

13. Vorrichtung für die Endodontie, wobei die Vorrichtung einen Arbeitsteil umfasst, der aus dem Draht gemäß einem der Ansprüche 1 bis 7 besteht.

14. Vorrichtung für die Endodontie gemäß Anspruch 13, wobei die Vorrichtung eine Zahnfeile ist.

15. Verfahren zur Herstellung von Vorrichtungen für die Endodontie gemäß Anspruch 13 oder 14, wobei das Verfahren die Schritte umfasst:
(i) Bereitstellen eines Nickel-Titanlegierungsdrahts gemäß einem der Ansprüche 1 bis 7,
(ii) Bilden von Vorrichtungen für die Endodontie aus dem Nickel-Titanlegierungsdraht durch Durchführen von Schneide- und Bearbeitungsschritten.

## Revendications

1. Fil d'alliage de nickel-titane hautement résistant à la fatigue, ledit fil ayant une température de transition de -15 °C à +10 °C après recuit à une température dans la plage de 700 °C à 900 °C, ledit fil étant étiré à un diamètre souhaité et ensuite recuit à une température dans la plage de 500 °C à 600 °C et traité thermiquement à une température dans la plage de 350 °C à 380 °C, ledit fil étant **caractérisé par** une largeur à mi-hauteur (FWHM) du pic de diffraction (110) de nickel-titane austénitique dans la plage de 2θ de 0,6° à 2θ de 0,7° dans un diagramme de diffraction des rayons X utilisant une source de rayonnement Cu Kα,
le diagramme de diffraction des rayons X étant mesuré par une mesure de θ-2θ continue de 25° à 80° dans les conditions suivantes :
tension de la source de rayonnement : 40 kV
amplitude de la source de rayonnement : 40 mA
monochromateur : graphite
détecteur : à scintillation
fente de divergence variable : 6 mm
fente de Soller primaire et secondaire
fente anti-diffusion : 2 mm
fente de réception : 0,2 mm
fente du détecteur : 0,6 mm
taille des pas : 0,02°
vitesse de balayage : 0,02°/min
correction du bruit de fond : soustraction linéaire entre les 2θ de 38° et de 48°.

2. Fil d'alliage de nickel-titane hautement résistant à la fatigue selon la revendication 1, le rapport des intensités de pic du pic (202) de Ni₃Ti à la somme du pic (110) de NiTi austénitique et du pic (202) de Ni₃Ti étant dans la plage de 5 % à 20 % après une correction du bruit de fond de soustraction linéaire entre les 2θ de 25° et de 80°.

3. Fil d'alliage de nickel-titane hautement résistant à la fatigue selon la revendication 1 ou 2, le nombre total de cycles avant la rupture du fil d'alliage de nickel-titane hautement résistant à la fatigue étant au-dessus de 10000 sous une déformation de 1 % à une vitesse de rotation constante à 3600 tr/min à 20 à 23 °C.

4. Fil d'alliage de nickel-titane hautement résistant à la fatigue selon l'une quelconque des revendications précédentes, la température de fin de formation de phase austénitique A_{F} étant supérieure à 40 °C.

5. Fil d'alliage de nickel-titane hautement résistant à la fatigue selon l'une quelconque des revendications précédentes, ledit fil ayant une température de transition de -15 °C à +10 °C après recuit à une température dans la plage de 700 °C à 900 °C pendant 5 à 30 minutes.

6. Fil d'alliage de nickel-titane hautement résistant à la fatigue selon l'une quelconque des revendications précédentes, la température de transition dudit fil étant d'environ -7 °C après recuit à une température de 850 °C pendant 20 minutes.

7. Fil d'alliage de nickel-titane hautement résistant à la fatigue selon l'une quelconque des revendications précédentes, le diamètre du fil étant dans la plage de 0,1 mm à 3 mm.

8. Procédé pour la fabrication d'un fil d'alliage de nickel-titane hautement résistant à la fatigue selon l'une quelconque des revendications précédentes, comprenant les étapes consistant à :
(a) fournir un fil machine ou fil d'alliage de nickel-titane ayant une composition comprenant environ 50 ± 10 % en poids de nickel et le reste de titane et d'éléments sous forme de traces,
(b) recuire ledit fil machine ou fil d'alliage de nickel-titane à une température dans la plage de 700 °C à 900 °C,
(c) étirer ledit fil machine ou fil d'alliage de nickel-titane dans une ou plusieurs passes pour réaliser un fil d'alliage de nickel-titane de diamètre souhaité,
(d) recuire ledit fil d'alliage de nickel-titane à une température dans la plage de 500 °C à 600 °C,
(e) traiter thermiquement ledit fil d'alliage de nickel-titane recuit à une température dans la plage de 350 °C à 380 °C.

9. Procédé pour la fabrication d'un fil d'alliage de nickel-titane hautement résistant à la fatigue selon la revendication 8, dans lequel dans l'étape (b) ledit fil machine ou fil d'alliage de nickel-titane est recuit pendant une durée de 5 à 30 minutes.

10. Procédé pour la fabrication d'un fil d'alliage de nickel-titane hautement résistant à la fatigue selon la revendication 8 ou 9, dans lequel dans l'étape (c) ledit fil machine ou fil d'alliage de nickel-titane est étiré dans deux ou plus de deux passes et le fil d'alliage de nickel-titane subit un recuit à 600 à 850 °C après une ou plusieurs passes.

11. Procédé pour la fabrication d'un fil d'alliage de nickel-titane hautement résistant à la fatigue selon l'une quelconque des revendications 8 à 10, dans lequel dans l'étape (c) ledit fil machine ou fil d'alliage de nickel-titane est étiré dans deux ou plus de deux passes pour réaliser une réduction de surface de section transversale d'environ 40 %, par la suite subit un recuit et est encore étiré pour réaliser une réduction de surface de section transversale d'environ 40 %.

12. Procédé pour la fabrication d'un fil d'alliage de nickel-titane hautement résistant à la fatigue selon l'une quelconque des revendications 8 à 11, dans lequel dans l'étape (e) de traitement thermique, la durée varie d'environ 5 à environ 60 minutes.

13. Dispositif pour l'endodontie, ledit dispositif comprenant une partie de travail formée à partir du fil selon l'une quelconque des revendications 1 à 7.

14. Dispositif pour l'endodontie selon la revendication 13, ledit dispositif étant une lime dentaire.

15. Procédé pour la fabrication de dispositifs pour l'endodontie selon la revendication 13 ou 14, ledit procédé comprenant les étapes consistant à :
(i) fournir un fil d'alliage de nickel-titane selon l'une quelconque des revendications 1 à 7,
(ii) former des dispositifs pour l'endodontie à partir dudit fil d'alliage de nickel-titane par la mise en oeuvre d'opérations de coupe et d'usinage.
